# EUROPEAN PATENT APPLICATION

(11) **EP 4 733 150 A1**
(43) Date of publication of application: **29.04.2026**
(21) Application number: 25209915.5
(22) Date of filing: 20.10.2025
(51) Int. Cl.: B60R 19/48, G01S 7/02, G01S 13/931

(54) **VEHICLE STRUCTURE**

(30) Priority: 25.10.2024 JP 2024187982
(71) Applicant: Suzuki Motor Corporation, Shizuoka 432-8611 (JP)
(72) Inventor: KAWAHARA, Shunya, Hamamatsu-shi, 432-8611 (JP); ARIMITSU, Kaishi, Hamamatsu-shi, 432-8611 (JP)
(74) Representative: Haseltine Lake Kempner LLP

(57) **Abstract**

[Problem to be Solved] To reduce swinging of a sensor device and facilitate transfer of an external load to a vehicle body structure member side of a sensor support member when subjected to an external force.

[Solution] A vehicle structure 1 includes a sensor support member 2 supporting a sensor device configured to sense an environment outside a vehicle. The sensor support member 2 includes a base portion 3 fixed to a vehicle body structure member 20 of the vehicle and including a base bulging portion 31 that bulges toward the vehicle outer side, and a projecting bulging portion 4 projecting toward one side in an up-down direction with respect to the base portion 3 so as to be continuous with the base bulging portion 31. The projecting bulging portion 4 includes a sensor support portion 41 that supports the sensor device.

## Description

### [Technical Field]

The present invention relates to vehicle structures including structures for disposing a sensor at a front portion, rear portion, or side portion of a vehicle.

### [Background Art]

A sensor device configured to sense an environment outside a vehicle is provided at a front portion or rear portion of a vehicle such as an automobile. Examples of the sensor device include a millimeter wave radar that uses electromagnetic waves in a millimeter wave band as detection waves, and a sound wave sensor (ultrasonic wave sensor/sonar) that uses sound waves as detection waves, and a camera (image capturing device).

A structure disclosed in Patent Literature 1 is known as an example of a conventional vehicle structure having a structure for supporting a sensor device on a vehicle body structure member of a vehicle. The structure disclosed in Patent Literature 1 includes a first absorption mechanism that holds a sensor bracket, which holds a sensor device, in a retractable manner in the front-rear direction, and a second absorption mechanism that holds the sensor bracket in a swingable manner. With this structure, when an external load is applied near the sensor device from the vehicle front side, impact energy due to the external load is absorbed through swinging of the sensor bracket to the rear side by the second absorption mechanism, and accordingly, the sensor device is protected.

### [Citation List]

### [Patent Literature]

[Patent Literature 1] JP 2021-148607 A

### [Summary of Invention]

### [Problem to be Solved by the Invention]

However, when a sensor device is supported in a state in which the sensor device is suspended downward from a vehicle body structure member through a sensor supporting member such as the sensor bracket of Patent Literature 1, the sensor supporting member potentially swings due to vibrations of the vehicle during driving or the like, which leads to degradation in the sensing accuracy of the sensor device, and an external load is less likely to be transferred to the vehicle body structure member side of the sensor supporting member.

Thus, it is an object of the present invention to provide a vehicle structure capable of reducing swinging of a sensor device and facilitating transfer of an external load to a vehicle body structure member side of a sensor supporting member when subjected to an external force.

### [Means for Solving the Problem]

An aspect of the present invention is a vehicle structure including a sensor supporting member extending in an up-down direction and supporting a sensor device configured to sensing an environment outside a vehicle. In the vehicle structure, the sensor supporting member includes a base portion fixed to a vehicle body structure member of the vehicle and including a base bulging portion that bulges toward the vehicle outer side, and a projecting bulging portion projecting toward one side in an up-down direction with respect to the base portion so as to be continuous with the base bulging portion. The projecting bulging portion includes a sensor support portion that supports the sensor device.

### [Advantageous Effect of Invention]

According to the aspect of the present invention, it is possible to reduce swinging of a sensor device and facilitate transfer of an external load to a vehicle body structure member side of a sensor supporting member when subjected to an external force.

### [Brief Description of Drawings]

[Figure 1] Figure 1 is a perspective view of a front portion of a vehicle to which a vehicle structure according to an embodiment of the present invention is applied.
[Figure 2] Figure 2 is a perspective view of the front portion of the vehicle in a state in which a second exterior panel is removed.
[Figure 3] Figure 3 is an exploded perspective view of a sensor support member and a vehicle body structure member.
[Figure 4] Figure 4 is a perspective view of the sensor support member and the vehicle body structure member when viewed from a vehicle rear side.
[Figure 5] Figure 5 is a front view of the sensor support member.
[Figure 6] Figure 6 is a cross-sectional view of the sensor support member and the vehicle body structure member along line A-A in Figure 4.
[Figure 7] Figure 7 is a perspective cross-sectional view of the sensor support member and the vehicle body structure member along line B-B in Figure 4.
[Figure 8] Figure 8 is an enlarged view of a region C in Figure 5.
[Figure 9] Figure 9 is a perspective view of an adjacent portion of the second exterior panel attached outside a frame portion.

### [Mode for Carrying Out the Invention]

Exemplary embodiments of the present invention will be described below with reference to the accompanying drawings. In the drawings, the direction of arrow Fr indicates a vehicle front side in a vehicle front-rear direction. The direction of arrow L indicates a left side of the vehicle in a vehicle width direction in a state in which the vehicle is viewed from the rear side toward the front side, and the direction of arrow R indicates a right side of the vehicle in the vehicle width direction in a state in which the vehicle is viewed from the rear side toward the front side. The direction of arrow U indicates a vehicle upper side in a vehicle up-down direction (hereinafter referred to as an up-down direction). In the description below, "front" and "rear" correspond to front and rear, respectively, in the vehicle front-rear direction, and "up" and "down" correspond to up and down, respectively, in the vehicle up-down direction. In addition, "left" and "right" correspond to left and right, respectively, in the vehicle width direction in a state of being viewed from the vehicle rear side toward the vehicle front side.

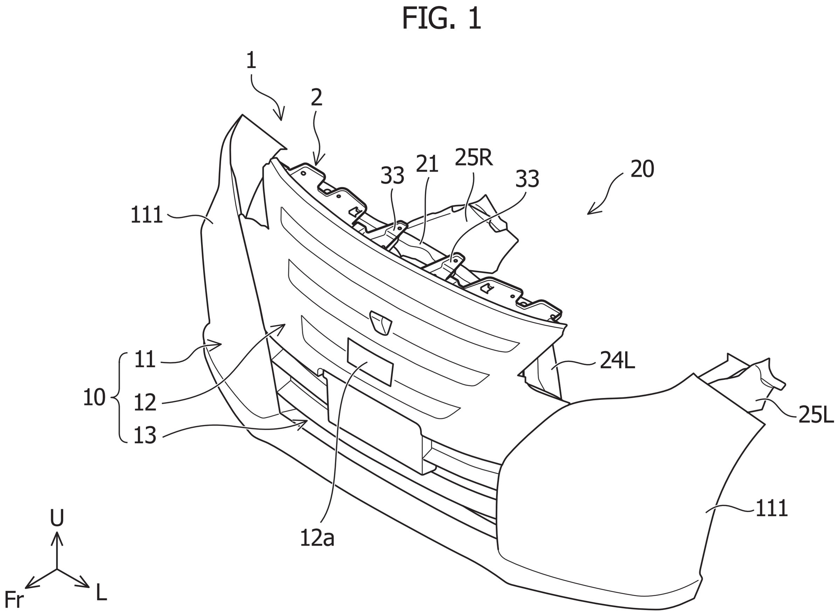

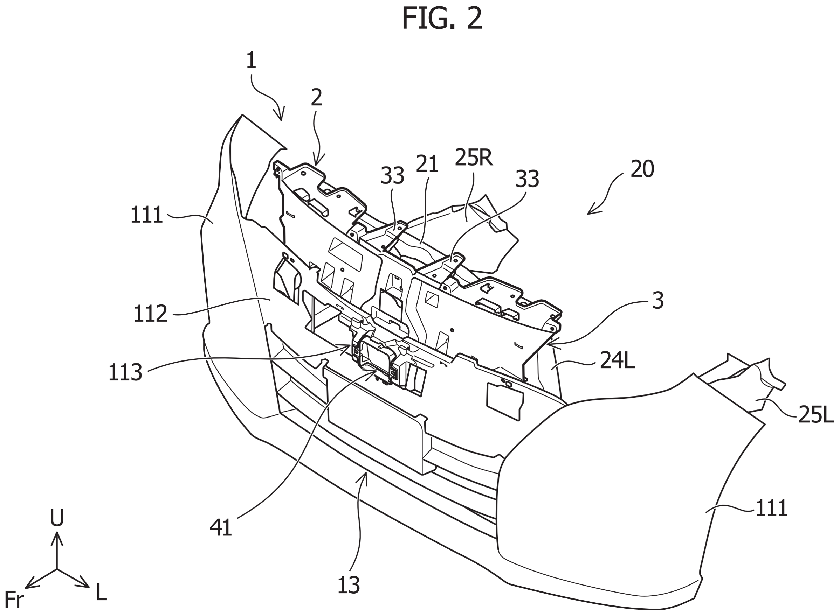

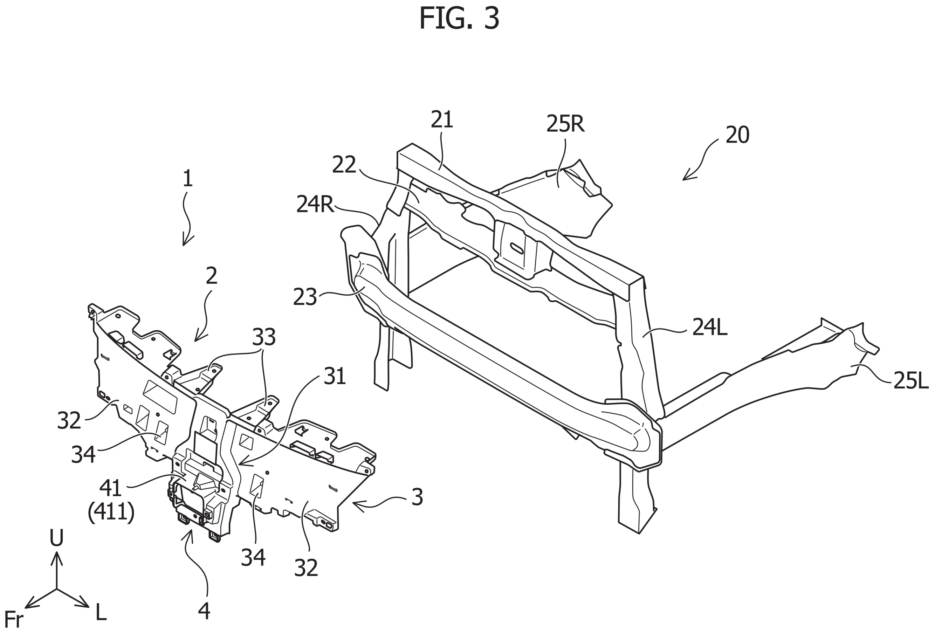

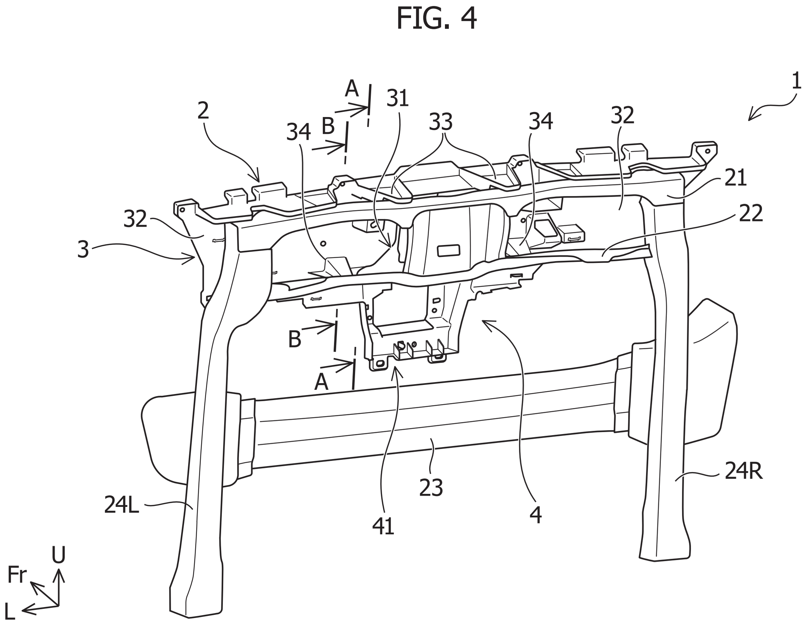

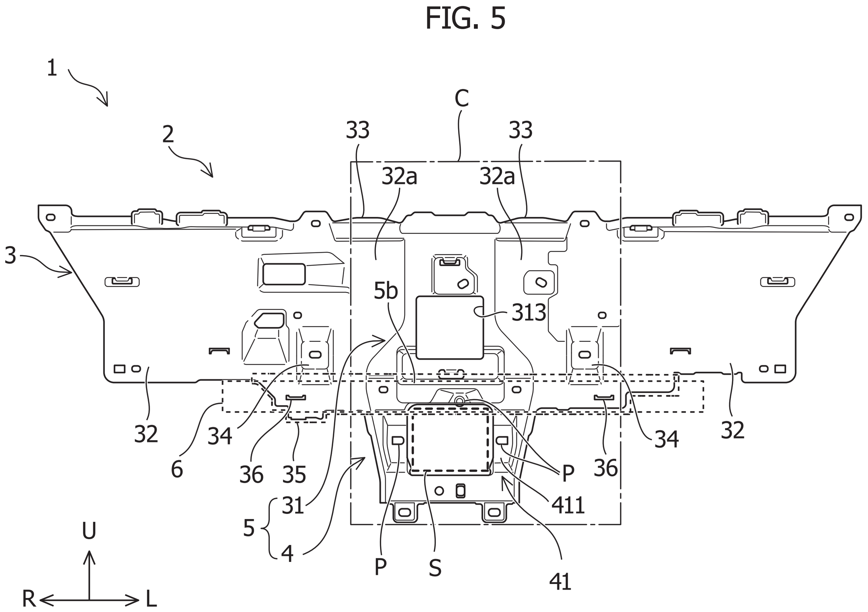

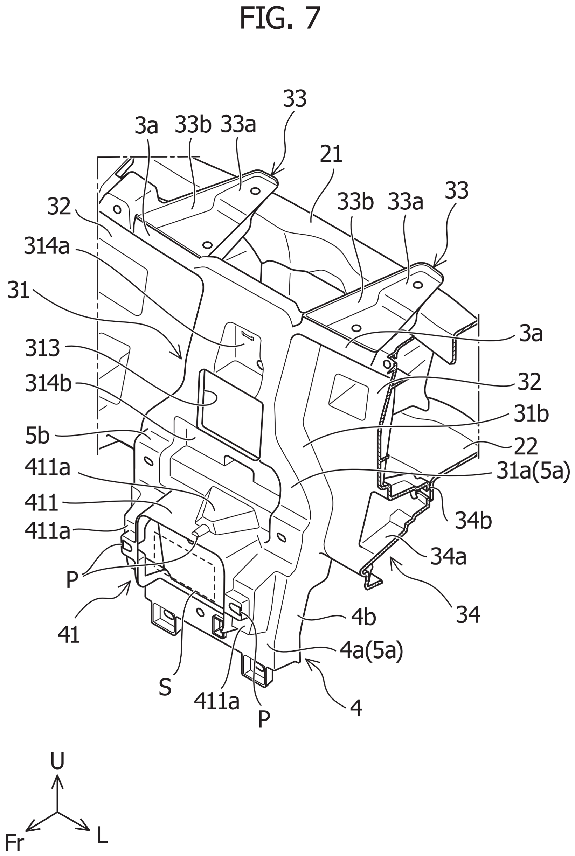

As illustrated in Figures 1 to 4, a vehicle structure 1 according to the present embodiment is disposed at a front portion, rear portion, or side portion of a vehicle such as an automobile and includes a sensor support member 2 that supports a sensor device S (refer to Figures 5 and 7) configured to sense an environment outside the vehicle. In the present embodiment, the vehicle structure 1 is applied to the front portion of the vehicle, and the sensor support member 2 is disposed at the front portion of the vehicle. Figure 1 is a perspective view of the front portion of the vehicle when viewed from the vehicle front side. Figure 2 is a perspective view of the front portion of the vehicle from which a second exterior panel 12 (to be described later) is removed when viewed from the vehicle front side. Figure 3 is an exploded perspective view of the sensor support member 2 and a vehicle body structure member 20 when viewed from the vehicle front side. Figure 4 is a perspective view of the sensor support member 2 and the vehicle body structure member 20 when viewed from the vehicle rear side, in which illustration of side members 25L and 25R (to be described later) is omitted. Note that the front portion of the vehicle includes not only a central portion in the vehicle width direction, which faces the vehicle front side, but also side end portions on both sides in the vehicle width direction, which face forward and obliquely to the sides, such as side portions 111 and 111 of a first exterior panel 11, to be described later.

An exterior member 10 that constitutes a design surface on the vehicle outer side, and the vehicle body structure member 20 that is a highly rigid member made of a steel plate or the like and constitutes a framework of the vehicle, are provided at the front portion of the vehicle. The sensor support member 2 is a member for disposing the sensor device S at an intended position relative to the vehicle body structure member 20. The sensor support member 2 is adjacently disposed on the vehicle inner side (rear side) of the exterior member 10 and coupled to the exterior member 10. The sensor support member 2 is fixed to and supported by the vehicle body structure member 20. The sensor device S is, for example, a millimeter wave radar that uses electromagnetic waves in a millimeter wave band as detection waves, and transmits (emits) and receives (detects) detection waves. The second exterior panel 12 of the exterior member 10 is provided with a detection wave passing region 12a through which detection waves can pass.

The sensor device S may be a sound wave sensor (ultrasonic wave sensor/sonar) that uses sound waves as detection waves, or a camera (image capturing device) that uses electromagnetic waves in a visible light band or an infrared band as detection waves, or the like, and in this case, the detection wave passing region 12a may have a through-hole (opening). Detection waves may be sunlight or be transmitted from a detection wave transmission device provided separately from the sensor device S, and in such a case, the sensor device S may not emit detection waves.

The exterior member 10 is a bumper panel and extends in the vehicle up-down direction and the vehicle width direction. In the present embodiment, the exterior member 10 includes the first exterior panel 11, the second exterior panel 12, and a third exterior panel 13, and the three exterior panels 11, 12, and 13 are coupled to each other. The first exterior panel 11 is also called a side panel and mainly constitutes design surfaces at both side portions in the vehicle width direction in a design surface at the front portion of the vehicle. The second exterior panel 12 is also called an upper panel and constitutes a design surface at an upper portion of a central portion in the vehicle width direction in the design surface at the front portion of the vehicle. The third exterior panel 13 is a grille having a plurality of ventilation holes penetrating in the vehicle front-rear direction, is disposed below the second exterior panel 12, and constitutes a design surface at a lower portion of the central portion in the vehicle width direction in the design surface at the front portion of the vehicle.

The vehicle body structure member 20 is disposed on the vehicle rear side relative to the exterior member 10 and supports the exterior member 10 and the sensor support member 2 from the rear side. As illustrated in Figure 3, in the present embodiment, the vehicle body structure member 20 includes a first cross member 21, a second cross member 22, a pair of left and right pillar members 24L and 24R, and the pair of left and right side members 25L and 25R. The first and second cross members 21 and 22 extend in the vehicle width direction and are disposed with a spacing therebetween in the up-down direction. The left and right pillar members 24L and 24R extend in the up-down direction and are disposed with a spacing therebetween in the vehicle width direction. Respective end portions of each of the first and second cross members 21 and 22 in the vehicle width direction are joined to the left and right pillar members 24L and 24R. The first cross member 21 is disposed between upper ends of the left and right pillar members 24L and 24R. The first cross member 21 is also called a hood lock member in a case in which a hood lock mechanism that locks the opening and closing of a hood panel (not shown) is provided. The second cross member 22 is disposed below the first cross member 21. The left and right side members 25L and 25R are joined to the left and right pillar members 24L and 24R, respectively, and extend toward the vehicle rear side.

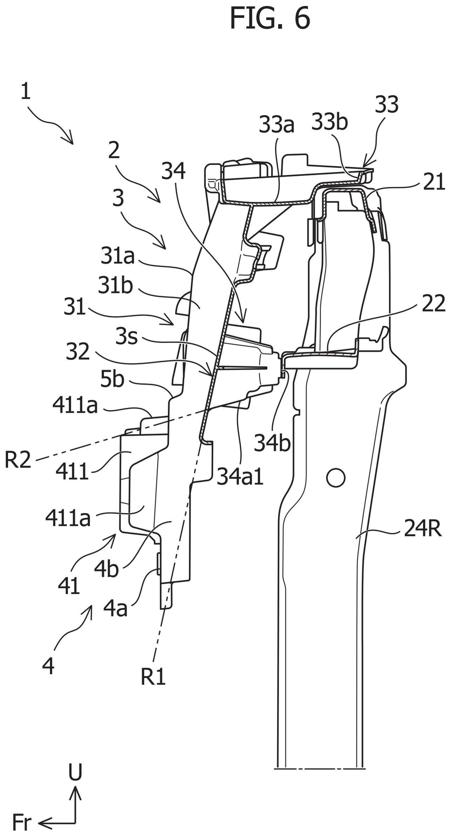

Figure 5 is a front view of the sensor support member 2 when viewed from the vehicle front side (vehicle outer side). Figure 6 is a cross-sectional view of the sensor support member 2 and the vehicle body structure member 20 along line A-A in Figure 4. Figure 7 is a perspective cross-sectional view of the sensor support member 2 and the vehicle body structure member 20 along line B-B in Figure 4. Figures 6 and 7 illustrate a state in which the sensor support member 2 is fixed to the vehicle body structure member 20. In Figure 6, a third cross member 23 and the side member 25R, which are illustrated in Figure 3, are omitted.

As illustrated in Figures 5 and 6, the sensor support member 2 includes a base portion 3 extending in the up-down direction and a width direction that is fixed to the vehicle body structure member 20 of the vehicle, and a projecting bulging portion 4 projecting toward the lower side with respect to the base portion 3. The width direction is a direction orthogonal to both the up-down direction and the vehicle front-rear direction and aligns with the vehicle width direction. The sensor support member 2 is, for example, an injection-molded resin product, and the base portion 3 and the projecting bulging portion 4 are integrally formed.

As illustrated in Figure 5, the sensor support member 2 is disposed substantially facing the vehicle front side and has a substantially T-shape in a plan view from one side in the vehicle front-rear direction. The base portion 3 has a substantially quadrilateral shape that is elongated in the width direction in the plan view, and the projecting bulging portion 4 projects downward from a lower end of a central portion of the base portion 3 in the width direction. As illustrated in Figure 6, in a side view from one side in the width direction, the base portion 3 has a substantially inverted L-shape extending from the lower end toward the vehicle upper side and then bending to the vehicle rear side. At upper vehicle body fixation portions 33 and outer vehicle body fixation portions 34, to be described later, the base portion 3 is fixed to the first cross member 21 and the second cross member 22 as part of the vehicle body structure member 20. The projecting bulging portion 4 is suspended downward to the front side from the first cross member 21 and the second cross member 22 through the base portion 3.

The base portion 3 includes a base bulging portion 31 extending in the up-down direction and bulging toward the vehicle front side (vehicle outer side), and a pair of side portions 32 and 32 on respective sides of the base bulging portion 31 in the width direction. The base bulging portion 31 is provided at the central portion of the base portion 3 in the width direction and extends upward from the lower end of the base portion 3. The pair of side portions 32 and 32 extend outward in the width direction from respective side ends of the base bulging portion 31 in the width direction. Note that the vehicle outer side is a direction from the vehicle inner side of the sensor support member 2 toward the vehicle outer side of the sensor support member 2, and is the vehicle front side in the present embodiment.

Specifically, the base bulging portion 31 includes a vertical wall 31a extending in the up-down direction and the width direction and facing the vehicle front side, and a pair of sidewalls 31b extending in the up-down direction along side edges of the vertical wall 31a on the respective sides in the width direction. Each sidewall 31b protrudes toward the vehicle rear side from the corresponding side edge of the vertical wall 31a and connects the vertical wall 31a to the corresponding side portion 32. In the illustrated example, each side portion 32 includes a flat portion 32a extending in the up-down direction at a portion adjacent to the base bulging portion 31 in the width direction. The base bulging portion 31 bulges toward the vehicle front side continuously from the flat portion 32a, and the vertical wall 31a is disposed at a position offset toward the vehicle front side with respect to the flat portion 32a.

The projecting bulging portion 4 projects toward the lower side with respect to the base portion 3 so as to be continuous with the base bulging portion 31, and bulges toward the vehicle outer side with respect to the base portion 3. Specifically, the projecting bulging portion 4 extends downward continuously from a lower end of the base bulging portion 31 and projects downward with respect to the lower end of the base portion 3. In the illustrated example, the projecting bulging portion 4 has a substantially quadrilateral shape in a plan view from the vehicle front side.

Specifically, the projecting bulging portion 4 includes a vertical wall 4a extending in the up-down direction and the width direction and facing the vehicle front side, and a pair of sidewalls 4b extending in the up-down direction along side edges of the vertical wall 4a on the respective sides in the width direction. Each sidewall 4b protrudes toward the vehicle rear side from the corresponding side edge of the vertical wall 4a. The vertical wall 4a extends downward continuously from a lower end of the vertical wall 31a and is disposed at a position offset toward the vehicle front side with respect to the flat portion 32a. Each sidewall 4b extends downward continuously from a lower end of the corresponding sidewall 31b. In this manner, the base bulging portion 31 and the projecting bulging portion 4 form a bulging portion 5 bulging toward the vehicle front side (vehicle outer side) from a reference surface 3s of the base portion 3. The reference surface 3s is a surface of a portion adjacent to the base bulging portion 31 in the width direction, the surface facing the vehicle front side (vehicle outer side), and in the present embodiment, is a front surface of the flat portion 32a extending in the up-down direction along an imaginary line R1 in Figure 6.

The projecting bulging portion 4 of the bulging portion 5 includes a sensor support portion 41 that supports the sensor device S. In the present embodiment, the sensor support portion 41 includes a plurality of sensor fixation points P. The sensor device S is disposed at the sensor support portion 41 in an orientation facing the vehicle front side (vehicle outer side), and is attached to the sensor support portion 41 by fixing its bracket (not illustrated) to a plurality (in this example, three) of sensor fixation points P. The sensor support portion 41 is formed with a sensor opening for exposing the sensor device S toward the vehicle front side, and the sensor device S faces the detection wave passing region 12a of the second exterior panel 12 in the vehicle front-rear direction through the sensor opening.

According to the present embodiment, since the sensor support member 2 is provided with the bulging portion 5 (31, 4) bulging toward the vehicle front side, the rigidity of the sensor support portion 41 in the vehicle front-rear direction increases and swinging and displacement of the sensor device S due to vibrations during driving or the like can be reduced. More specifically, the projecting bulging portion 4 projects from the base bulging portion 31 bulging toward the vehicle front side and having increased rigidity (rigidity in the vehicle front-rear direction, in particular), and accordingly, the support rigidity of the projecting bulging portion 4, and consequently that of the sensor support portion 41, are increased. The sensor device S is supported by such a sensor support portion 41 at a position separated toward the vehicle front side from the vehicle body structure member 20, and thus displacement of the sensor device S due to vibrations during driving or the like can be reduced. Moreover, since the projecting bulging portion 4 itself bulges toward the vehicle front side, the rigidity of the projecting bulging portion 4 and the sensor support portion 41 is increased and swinging and displacement of the sensor device S can be more reliably reduced.

When external force (impact) toward the vehicle rear side is applied to the front portion of the vehicle due to contact with an object or the like, an external load (impact load) due to the external force acts on the sensor support member 2 through the exterior member 10. At this time, the impact load from the vehicle front side can be dispersed around the base bulging portion 31 of the base portion 3 through the bulging portion 5 (31, 4), and deformation of the base portion 3 in the sensor support member 2 can be promoted. For example, deformation can be promoted around the vertical wall 31a, which forms the belly of the base bulging portion 31, and the sidewalls 31b of the base bulging portion 31, to which the impact load is easily transferred. In this manner, through dispersion of the impact load to the base portion 3, impact energy is effectively absorbed as deformation energy around the base bulging portion 31 of the base portion 3 and at the projecting bulging portion 4. When impact energy is not absorbed as deformation energy, the remaining impact load is efficiently transferred to the vehicle body structure member 20, to which the sensor support member 2 is fixed, through the base portion 3.

Furthermore, the sensor support portion 41 is provided at the projecting bulging portion 4 projecting toward the lower side with respect to the base portion 3 so as to be continuous with the base bulging portion 31 projecting toward the vehicle front side, and is disposed at a position offset with respect to the vehicle body fixation portions 33 and 34 of the base portion 3. Accordingly, a long impact transfer path is ensured between the sensor support portion 41 and the vehicle body fixation portions 33 and 34. This promotes extensive deformation of the sensor support member 2 due to an impact load, and impact energy can be effectively absorbed as deformation energy of the sensor support member 2. Specifically, when an impact load acts near the sensor support portion 41, the impact load can be dispersed toward the base bulging portion 31 to promote deformation of the base portion 3, and the sensor support portion 41 can be moved (swung) toward the vehicle rear side together with deformation of at least a peripheral portion of the sensor support portion 41 in the sensor support member 2. More specifically, deformation of a vertical wall 5a (31a, 4a) as the belly of the bulging portion 5 and the sidewalls 31b of the base bulging portion 31 can be promoted while the impact load is dispersed around the base bulging portion 31 to increase a deformation range of the base portion 3. If the impact load is not sufficiently dispersed from the sensor support portion 41 toward the base portion 3, local deformation of the sensor support member 2, such as swinging of only the projecting bulging portion 4 toward the rear side with respect to the base bulging portion 31, may occur so that further deformation of the sensor support member 2 (base portion 3, in particular) does not occur and impact energy is not sufficiently absorbed.

The sensor support portion 41 is provided at the projecting bulging portion 4 protruding toward the lower side with respect to the base portion 3. Since the projecting bulging portion 4 projects so as to be continuous with the base bulging portion 31, the projecting bulging portion 4 can support the sensor support portion 41 in cooperation with the base bulging portion 31, and accordingly, the sensor support portion 41 is supported by the base portion 3. Thus, the support rigidity for the sensor device S increases, and swinging and displacement of the sensor device S can be more reliably reduced.

In this manner, according to the present embodiment, it is possible to reduce displacement of the sensor device S due to vibrations or the like during vehicle driving such as travelling, while facilitating transfer and dispersion of an external load to the vehicle body structure member 20 side (specifically, the base portion 3 side fixed to the vehicle body structure member 20) of the sensor support member 2 when subjected to external force. This further promotes deformation of the sensor support member 2 and enables effective absorption of impact energy.

Moreover, according to the present embodiment, since the sensor support portion 41 is provided at the projecting bulging portion 4, the sensor device S can be easily disposed at a position separated toward the vehicle outer side from the vehicle body structure member 20. By disposing the sensor device S at a position closer to the vehicle outer side (in other words, disposing the sensor device S at a position closer to the exterior member 10), it is possible to increase the accuracy of sensing of an environment outside the vehicle by the sensor device S.

Furthermore, in the present embodiment, the sensor device S is disposed on the vehicle inner side relative to a surface of a frame portion 411 on the vehicle outer side (in other words, its front surface), thereby facilitating protection of the sensor device S from impact. In particular, the sensor device S is housed in the frame portion 411 provided at the sensor support portion 41, thereby further facilitating the protection of the sensor device S.

As illustrated with the imaginary line R1 in Figure 6, the base portion 3 is preferably tilted toward the vehicle front side (vehicle outer side) as it extends downward. With this configuration, an impact load transferred to the projecting bulging portion 4 can be easily transferred to the base bulging portion 31 along the tilt direction of the base portion 3 so that the impact load can be dispersed to the base portion 3 through the base bulging portion 31 to promote, for example, deformation around the vertical wall 31a and the sidewalls 31b of the base bulging portion 31. Specifically, the impact load is applied to the projecting bulging portion 4 and subsequently transferred from the projecting bulging portion 4 to the base portion 3. This promotes deformation of the sensor support member 2 such as movement (swinging) of the sensor support portion 41 toward the vehicle rear side, and impact energy can be more effectively absorbed as deformation energy. When an impact load from the vehicle front side is applied to the projecting bulging portion 4, an upward force component along the tilt of the base portion 3 is generated. Thus, the impact load transferred to the projecting bulging portion 4 can be dispersed to the base portion 3 through the base bulging portion 31 to promote deformation around the vertical wall 31a and the sidewalls 31b of the base bulging portion 31, and the impact load can be more efficiently transferred to the vehicle body structure member 20.

The vehicle structure 1 of the present embodiment will be described below in detail.

As illustrated in Figures 6 and 7, in the present embodiment, the sensor support portion 41 includes the frame portion (protruding portion) 411 that supports the sensor device S. The frame portion 411 protrudes toward the vehicle front side (vehicle outer side) from the vertical wall 4a of the projecting bulging portion 4 facing the vehicle front side (vehicle outer side). With this configuration, the frame portion 411 further protrudes toward the vehicle front side from the vertical wall 4a, which is offset toward the vehicle front side with respect to the base portion 3, and thus, the sensor device S can be disposed further to the vehicle outer side so that the sensing accuracy of the sensor device S can be increased. Moreover, an impact load due to external force from the vehicle front side can be easily applied to the frame portion 411, which further promotes deformation of the sensor support member 2 such as movement (swinging) of the sensor support portion 41 toward the vehicle rear side, and impact energy can be further effectively absorbed. Furthermore, since the support rigidity of the sensor support portion 41 increases by the frame portion 411 extending in the vehicle front-rear direction, displacement of the sensor device S is reduced in a normal situation when no external force is received. Note that, in the present embodiment, the frame portion 411 corresponds to a "protruding portion" according to the present invention.

The frame portion 411 has a substantially annular or tubular shape at least partially surrounding the sensor device S, the shape corresponding to the outer shape of the sensor device S. In the illustrated example, the sensor device S has a substantially rectangular parallelepiped shape, and the frame portion 411 has a partially annular or partially tubular shape that is substantially C-shaped or U-shaped, lacking a lower side of a quadrilateral shape, in a plan view from one side in the vehicle front-rear direction. The sensor opening is provided at a front end face of the frame portion 411. An upper part of the frame portion 411 is disposed on the base portion 3. The frame portion 411 includes, on each of the upper side, the left side, and the right side, a frame bulging portion 411a bulging outward in a wall thickness direction. The wall thickness direction is the thickness direction of a wall having a substantially annular or tubular shape and constituting the frame portion 411. The sensor fixation points P are provided at front end walls of the respective frame bulging portions 411a.

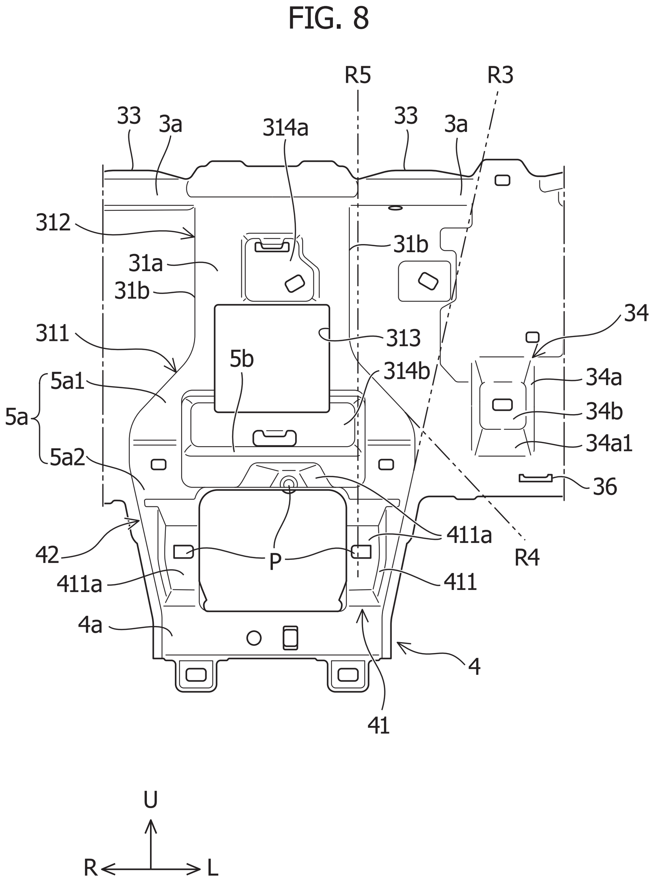

As illustrated in Figures 5 to 8, in the present embodiment, the bulging portion 5 includes a connection wall 5b extending in the vehicle width direction. Figure 8 is an enlarged view of a region C in Figure 5. Specifically, as illustrated in Figure 8, the vertical wall 5a of the bulging portion 5 facing the vehicle outer side includes a first portion 5a1 on the base portion 3 side, and a second portion 5a2 on the sensor support portion 41 side. The vertical wall 5a consists of the vertical wall 31a and the vertical wall 4a. The second portion 5a2 is disposed at a position offset toward the vehicle front side (vehicle outer side) with respect to the first portion 5a1, and the connection wall 5b connects the first portion 5a1 and the second portion 5a2 in the vehicle front-rear direction (vehicle in-out direction). Note that the vehicle in-out direction is a direction connecting the vehicle inner side of the sensor support member 2 and the vehicle outer side of the sensor support member 2, and is the vehicle front-rear direction in the present embodiment.

During normal use in which no external force is received from the vehicle outer side due to contact with an object or the like, the sensor device S needs to be maintained at an intended position relative to the vehicle body structure member 20 in order to maintain a desired sensing accuracy of the sensor device S. Since the connection wall 5b is provided, the torsion rigidity of the sensor support portion 41 increases. Accordingly, displacement of the sensor device S due to vibrations or the like during normal use from an intended position can be reduced to maintain the sensing accuracy of the sensor device S. Moreover, with the connection wall 5b, the second portion 5a2 of the vertical wall 5a is disposed at a position further offset toward the vehicle front side with respect to the base portion 3. This promotes deformation of the bulging portion 5, and impact energy can be more effectively absorbed as deformation energy.

In the illustrated example, the connection wall 5b extends in the width direction across the entire width of the vertical wall 5a through an upper end of the sensor support portion 41 (frame portion 411) or its vicinity. Accordingly, the first portion 5a1 is a portion above the upper end of the sensor support portion 41 (frame portion 411) or its vicinity, and the second portion 5a2 is a portion below the upper end of the sensor support portion 41 (frame portion 411) or its vicinity. The connection wall 5b protrudes toward the vehicle front side from a lower end of the first portion 5a1 to an upper end of the second portion 5a2. A central portion of the connection wall 5b in the width direction is disposed at a recessed portion 314b to be described later. In this manner, the connection wall 5b is provided in a connection region of the sensor support portion 41 and the base portion 3. Accordingly, the rigidity of the sensor support portion 41 and its peripheral portion can be effectively increased.

As illustrated in Figure 8, in the present embodiment, the vertical wall 4a of the projecting bulging portion 4 facing the vehicle outer side includes a widening portion 42 having a width that increases from the lower side to the upper side. The width is the dimension of the vertical wall 4a in the width direction. With this configuration, a deformation range of the projecting bulging portion 4 increases, and thus, impact energy can be more effectively absorbed as deformation energy at the projecting bulging portion 4. Moreover, an impact load applied to the projecting bulging portion 4 is transferred toward the base portion 3 while broadening in the width direction at the widening portion 42. Accordingly, the impact load can be transferred from the projecting bulging portion 4 to a wider range of the base portion 3 to promote deformation of the base portion 3 in a wider range.

Specifically, the widening portion 42 is at least part of the vertical wall 4a in the up-down direction. As illustrated with an imaginary line R3 in Figure 8, side edges of the widening portion 42 on the respective sides in the width direction are tilted in directions in which they become separated from each other in the width direction from the lower side to the upper side. The sidewalls 4b are tilted relative to the up-down direction along the side edges of the widening portion 42.

In the illustrated example, the widening portion 42 extends upward from the lower end of the sensor support portion 41 (frame portion 411) or its vicinity to the upper end of the sensor support portion 41 (frame portion 411) or its vicinity through the lower end of the base portion 3. An upper end portion of the widening portion 42 is constituted by a lower end portion of the vertical wall 31a of the base bulging portion 31 and is continuous with the side portions 32 and 32 of the base portion 3 in the width direction. Thus, an impact load can be more effectively transferred from the widening portion 42 to the base portion 3.

As illustrated in Figures 5 to 8, in the present embodiment, the base portion 3 includes the upper vehicle body fixation portions 33 fixed to the vehicle body structure member 20 at an upper end portion that is an end portion on the upper side in the up-down direction. As illustrated in Figure 8, the base bulging portion 31 includes a narrowing portion 311 having a width that decreases from the lower side to the upper side, and an extension portion 312 extending upward in the up-down direction from the narrowing portion 311. The extension portion 312 is disposed at a position offset in the width direction with respect to the upper vehicle body fixation portions 33. Note that, in the present embodiment, each upper vehicle body fixation portion 33 corresponds to an "upper-lower side vehicle body fixation portion" according to the present invention.

As described later, the upper vehicle body fixation portions 33 fixed to the vehicle body structure member 20 extend toward the vehicle rear side (vehicle inner side) from an upper edge portion of the base portion 3. The upper vehicle body fixation portions 33 are provided with peripheral walls 33b each forming a frame shape together with an upper edge portion (upper end walls 3a) and have high rigidity (refer to Figure 7). The other part of the upper end portion of the base portion 3 than the upper vehicle body fixation portions 33 has a lower rigidity than that of the upper vehicle body fixation portions 33 and is susceptible to deformation. An impact load from the projecting bulging portion 4 is transferred while converging in the width direction as it moves upward at the narrowing portion 311, and subsequently, is transferred toward a position offset from the upper vehicle body fixation portions 33 in the width direction through the extension portion 312. This promotes deformation of the base bulging portion 31 as well as deformation of the other part of the upper end portion of the base portion 3 than the upper vehicle body fixation portions 33, and impact energy can be more effectively absorbed.

Since the narrowing portion 311 is provided, the sidewalls 31b of the base bulging portion 31 are curved in the width direction. This increases the total lengths of the sidewalls 31b, thereby increasing a deformation range of the base bulging portion 31. Accordingly, impact energy can be more effectively absorbed at the base bulging portion 31.

In the illustrated example, the base portion 3 includes two upper vehicle body fixation portions 33 and 33 disposed with a spacing therebetween in the width direction above the base bulging portion 31. Each upper vehicle body fixation portion 33 protrudes toward the vehicle rear side (vehicle inner side) from an upper end of the corresponding side portion 32. An insertion hole into which a coupling member such as a bolt is inserted is formed at a rear end portion of each upper vehicle body fixation portion 33. Each upper vehicle body fixation portion 33 is coupled (fixed) to the first cross member 21 by using the coupling member. Note that the vehicle inner side is a direction from the vehicle outer side of the sensor support member 2 to the vehicle inner side of the sensor support member 2, and is the vehicle rear side in the present embodiment.

The narrowing portion 311 is provided adjacent to the widening portion 42 on the upper side of the widening portion 42 and extends upward to a substantially center of the base portion 3 in the up-down direction. As illustrated in phantom line R4 in Figure 8, in a plan view from the vehicle front side, side edges of the narrowing portion 311 on the respective sides in the width direction are tilted in directions in which they approach each other in the width direction from the lower side to the upper side. Parts of the sidewalls 31b are tilted along the side edges of the narrowing portion 311.

The extension portion 312 extends in the up-down direction from an upper end of the narrowing portion 311 to the upper end portion of the base portion 3 and has an upper end disposed between the two upper vehicle body fixation portions 33 and 33. In the illustrated example, the extension portion 312 has a constant width. In addition, a vehicle body fixation portion disposed outside the two upper vehicle body fixation portions 33 in the width direction and fixed to the vehicle body structure member 20 (first cross member 21) may be provided at the upper end portion of the base portion 3.

In the illustrated example, the sidewalls 31b of the base bulging portion 31 are curved inward in the width direction at the same position as, or in proximity to, the outer vehicle body fixation portions 34 (described later) in the up-down direction. In other words, a boundary between the narrowing portion 311 and the widening portion 42 (or a lower end of the narrowing portion 311) is located at the same position as, or in proximity to, the outer vehicle body fixation portions 34 in the up-down direction. Accordingly, an impact load from the sensor support portion 41 can be efficiently transferred to the outer vehicle body fixation portions 34 through the widening portion 42, and deformation of the base bulging portion 31 can be promoted through the narrowing portion 311.

As illustrated in Figure 7, the base bulging portion 31 is preferably formed continuously with the upper vehicle body fixation portions 33. With this configuration, the projecting bulging portion 4 is continuous with the upper vehicle body fixation portions 33 through the base bulging portion 31, and accordingly, the support rigidity of the vehicle body structure member 20 for the sensor support portion 41 increases, and displacement of the sensor device S due to vibrations of the vehicle or the like during normal use can be reduced.

Specifically, each upper vehicle body fixation portion 33 includes a bottom wall 33a protruding toward the vehicle rear side from the upper end of the corresponding side portion 32 and facing upward, and the peripheral wall 33b protruding upward from the periphery of the bottom wall 33a and extending along the periphery. Each sidewall 31b of the base bulging portion 31 is formed continuously with the peripheral wall 33b of the corresponding upper vehicle body fixation portion 33, and accordingly, each sidewall 4b of the projecting bulging portion 4 is continuous with the peripheral wall 33b of the corresponding upper vehicle body fixation portion 33 through the corresponding sidewall 31b of the base bulging portion 31.

As illustrated in Figure 8, each sidewall 31b of the base bulging portion 31 preferably extends downward from an end of the corresponding upper vehicle body fixation portion 33 on the inner side in the width direction (base bulging portion 31 side) toward the corresponding sensor fixation point P of the sensor support portion 41. With this configuration, the support rigidity for the sensor device S increases. Specifically, the ends of the left and right upper vehicle body fixation portions 33 on the inner side in the width direction are positioned above the left and right sensor fixation points P, respectively. In a plan view from one side in the vehicle front-rear direction, portions of the sidewalls 31b along side edges of the extension portion 312 extend downward from the upper end portion of the base portion 3 substantially along an imaginary line R5. The imaginary line R5 is an imaginary straight line connecting the end of the upper vehicle body fixation portion 33 on the inner side in the width direction to the corresponding sensor fixation point P in the up-down direction.

As illustrated in Figures 5, 7, and 8, in the present embodiment, the base bulging portion 31 has an opening portion 313 penetrating the base bulging portion 31 in the vehicle front-rear direction (vehicle in-out direction). Since the opening portion 313 is provided, deformation of the base bulging portion 31 due to an impact load can be promoted and impact energy can be more effectively absorbed. Specifically, the opening portion 313 is formed at the vertical wall 31a. In the illustrated example, the opening portion 313 has a substantially quadrilateral shape and is provided at a central portion of the vertical wall 31a in the up-down direction and the width direction and disposed at a position spaced upward from the upper side of the frame portion 411 and the connection wall 5b. The opening portion 313 may have any other shape.

As illustrated in Figures 7 and 8, the vertical wall 31a of the base bulging portion 31 preferably includes recessed portions 314a and 314b that are concave toward the vehicle rear side (vehicle inner side) near the opening portion 313. In the illustrated example, the two recessed portions 314a and 314b are provided adjacent to the opening portion 313 on the upper and lower sides of the opening portion 313. Since the opening portion 313 is provided, the rigidity of the base bulging portion 31 may decrease so that deformation of the base bulging portion 31 and displacement of the sensor device S due to vibrations of the vehicle or the like easily occur during normal use. Since the recessed portions 314a and 314b are provided, the rigidity of the base bulging portion 31 increases so that deformation of the base bulging portion 31 and displacement of the sensor device S are reduced during normal use. Accordingly, the base bulging portion 31 can deform upon an impact load due to external force caused by contact with an object or the like while maintaining a rigidity necessary for reduction of deformation due to vibrations of the vehicle or the like during normal use.

As illustrated in Figures 5, 7, and 8, in the present embodiment, the base portion 3 includes, outside the base bulging portion 31 in the width direction, the outer vehicle body fixation portions 34 fixed to the second cross member 22 as part of the vehicle body structure member 20. Specifically, the outer vehicle body fixation portions 34 are provided at the side portions 32 of the base portion 3, and the base bulging portion 31 includes no vehicle body fixation portion fixed to the vehicle body structure member 20. Accordingly, the base bulging portion 31 is indirectly coupled to the second cross member 22 through the side portions 32. In this manner, since the outer vehicle body fixation portions 34 are provided at the other part of the base portion 3 than the base bulging portion 31, deformation of the base bulging portion 31 due to an impact load can be promoted.

In the illustrated example, the outer vehicle body fixation portions 34 are provided on the respective sides of the base bulging portion 31 in the width direction. Each outer vehicle body fixation portion 34 is disposed at the middle of the corresponding side portion 32 in the up-down direction. Each outer vehicle body fixation portion 34 is preferably disposed at a position with a spacing from the base bulging portion 31 in the width direction and more preferably disposed outside the corresponding upper vehicle body fixation portion 33 in the width direction. With this configuration, it is possible to reduce inhibition of deformation of the base bulging portion 31 and its peripheral portion by the high rigidity of the outer vehicle body fixation portions 34 and reliably cause deformation of the base bulging portion 31 and its peripheral portion due to an impact load.

As illustrated in Figures 6 and 7, the outer vehicle body fixation portions 34 protrude toward the vehicle rear side (vehicle inner side) and contact the second cross member 22 as part of the vehicle body structure member 20 from the vehicle front side (vehicle outer side). Accordingly, on the rear side (vehicle inner side) of the base portion 3, a space that allows deformation of the base portion 3 is ensured in the vehicle front-rear direction between the other part of the base portion 3 than the outer vehicle body fixation portions 34 and the second cross member 22. When an impact load from the vehicle front side is applied, the base portion 3 deforms such that the projecting bulging portion 4 swings toward the vehicle rear side while the outer vehicle body fixation portions 34 buckle in the vehicle front-rear direction. In this manner, deformation of the base portion 3 due to an impact load from the vehicle front side can be promoted.

Each outer vehicle body fixation portion 34 is a concave portion with a bottom bulging toward the vehicle rear side and includes a tubular peripheral wall 34a extending in the vehicle front-rear direction, and a bottom wall 34b provided at a rear end of the peripheral wall 34a and facing the vehicle rear side. The bottom wall 34b contacts a front surface of the second cross member 22 as part of the vehicle body structure member 20. The bottom wall 34b is formed with an insertion hole into which a coupling member such as a bolt or a clip is inserted, and the outer vehicle body fixation portion 34 is fixed to the second cross member 22 at the bottom wall 34b by using such a coupling member.

As illustrated in Figure 6, a lower wall 34a1 of each outer vehicle body fixation portion 34 is tilted upward as it extends toward the vehicle rear side. Specifically, the peripheral wall 34a of each outer vehicle body fixation portion 34 has a substantially frustum shape that narrows toward the vehicle rear side, and has a substantially frustum of quadrangular pyramid shape in the illustrated example. The lower wall 34a1 is a lower portion of the peripheral wall 34a. An upper portion of the frame portion 411 of the sensor support portion 41 and the upper frame bulging portion 411a are positioned on an imaginary extended plane R2 as an imaginary extension of the lower wall 34a1 of each outer vehicle body fixation portion 34 toward the vehicle front side. With this configuration, an impact load is more efficiently transferred from the sensor support portion 41 to the outer vehicle body fixation portions 34, and as a result, transfer of the impact load to the vehicle body structure member 20 through the outer vehicle body fixation portions 34 can be improved.

As described above, in the present embodiment, the base portion 3 includes, at the upper end portion, the upper vehicle body fixation portions 33 fixed to the first cross member 21 as part of the vehicle body structure member 20. The base bulging portion 31 extends to the upper end portion of the base portion 3 in the up-down direction. With this configuration, the deformation range of the base bulging portion 31 increases so that impact energy due to an impact load can be more effectively absorbed. Moreover, an impact load that is not absorbed through deformation of the base bulging portion 31 can be efficiently transferred from the base bulging portion 31 to the vehicle body structure member 20 through the upper vehicle body fixation portions 33.

As illustrated in Figure 7, the peripheral wall 33b of each upper vehicle body fixation portion 33 preferably forms a closed cross section together with the upper end walls 3a provided at the upper end portion of the base portion 3. Each upper end wall 3a protrudes upward from a front end of the corresponding bottom wall 33a and extends in the width direction to connect both ends of the corresponding peripheral wall 33b in the width direction. With this configuration, the rigidity of each upper vehicle body fixation portion 33 increases so that an impact load can be more efficiently transferred from the base bulging portion 31 to the vehicle body structure member 20 through the upper vehicle body fixation portion 33.

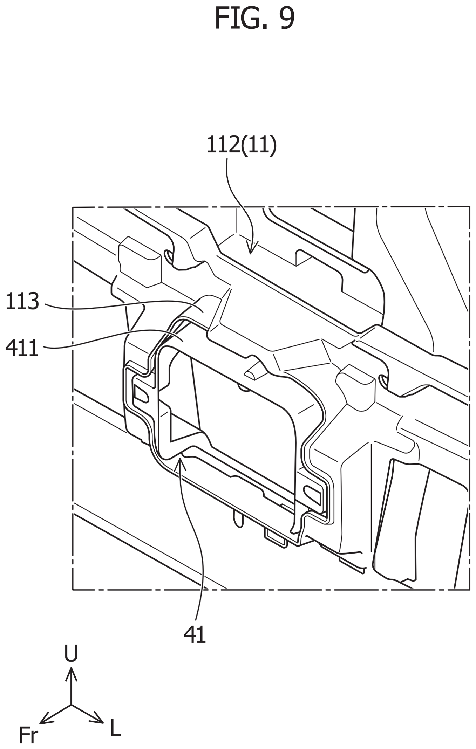

As illustrated in Figures 2 and 9, the vehicle structure 1 may further include the above-described first exterior panel 11 that is disposed on the vehicle front side (vehicle outer side) of the sensor support member 2 and constitutes a design surface on the vehicle outer side, and the first exterior panel 11 may include an adjacent portion 113 that is disposed adjacent to an outer peripheral surface of the frame portion 411 around the frame portion 411. In the present embodiment, the first exterior panel 11 corresponds to an "exterior panel" according to the present invention. With this configuration, the adjacent portion 113 and its peripheral portion are deformed together with the frame portion 411 by an impact load from the vehicle front side, and impact energy is absorbed through deformation of the adjacent portion 113 and its peripheral portion as well. Accordingly, impact energy can be further effectively absorbed.

Specifically, as illustrated in Figure 2, the first exterior panel 11 as a side panel includes the pair of side portions 111 and 111 disposed with a spacing therebetween in the vehicle width direction, and an attachment portion 112 provided between the pair of side portions 111 and 111. The attachment portion 112 extends in the vehicle width direction between the pair of side portions 111 and 111 and extends in the vehicle up-down direction. A lower portion of the second exterior panel 12 is attached to the attachment portion 112 from the vehicle front side, and a lower end portion of the base portion 3 and the projecting bulging portion 4 are disposed on the rear side of the attachment portion 112. An upper portion of the second exterior panel 12 covers a portion of the base portion 3 from the vehicle front side, the portion protruding upward from the attachment portion 112.

The adjacent portion 113 is provided at the attachment portion 112. The adjacent portion 113 has a frame shape corresponding to the outer shape of the frame portion 411, and in the illustrated example, has a substantially quadrilateral annular or tubular shape protruding toward the vehicle front side and closed in the circumferential direction. The frame portion 411 is inserted into the adjacent portion 113 from the vehicle rear side, and a front end of the frame portion 411 is disposed at the same position as a front end of the adjacent portion 113 in the vehicle front-rear direction or at a position on the vehicle front side of the front end.

As illustrated in Figure 5, in the present embodiment, the lower end portion of the base portion 3 includes an intermediate width portion 35 extending over the projecting bulging portion 4 in the width direction. The intermediate width portion 35 is narrower in the width direction than a portion of the base portion 3 above the intermediate width portion 35 and is wider in the width direction than the projecting bulging portion 4. Since such an intermediate width portion 35 is provided, an external load can be more easily transferred from the projecting bulging portion 4 to the base portion 3 side (vehicle body structure member 20 side). The intermediate width portion 35 extends to a position where the intermediate width portion 35 overlaps the outer vehicle body fixation portions 34 in the width direction or to a position below the outer vehicle body fixation portions 34, and accordingly, the support rigidity of the projecting bulging portion 4, and consequently of the sensor support portion 41, is increased. Moreover, the connection wall 5b is provided at the intermediate width portion 35, and accordingly, the rigidity of the intermediate width portion 35 is further increased.

As illustrated in Figure 5, in the present embodiment, the base portion 3 includes component coupling portions 36 to which a vehicle-mounted component 6 is coupled. In the illustrated example, the component coupling portions 36 are provided at the lower end portion of the base portion 3 (specifically, the intermediate width portion 35) and disposed on the respective sides of the base bulging portion 31 in the vehicle width direction. The vehicle-mounted component 6 is a component disposed around the sensor support member 2, and in the illustrated example, is an air guide member called a shroud, which guides air toward a condenser or an evaporator and prevents heated air from the power source side from backflow to these components. According to such a structure, since the vehicle-mounted component 6 is coupled, the rigidity of the component coupling portions 36 and its vicinity increases, and accordingly, the rigidity of the sensor support portion 41 increases. In Figure 5, the air guide member as the vehicle-mounted component 6 is illustrated as a linear member, but the shape of the air guide member is not limited thereto. For example, the air guide member may be a frame-shaped member, and in this case, the functions of the air guide member in guiding air and reducing backflow of heated air as well as the effect of increasing the rigidity of the sensor support portion 41 are further enhanced.

The component coupling portions 36 are positioned below the left and right outer vehicle body fixation portions 34, respectively, to increase the rigidity of the component coupling portions 36 as coupling places of the sensor support member 2 and the vehicle-mounted component 6 and their vicinities. Moreover, the three sensor fixation points P are positioned between the two component coupling portions 36 in the vehicle width direction to increase the rigidity of each sensor fixation point P. In particular, the upper sensor fixation point P is arranged in a row in the vehicle width direction with the two component coupling portions 36 so that the rigidity of the upper sensor fixation point P and its vicinity effectively increases, and as a result, the support rigidity for the sensor device S effectively increases.

Note that, in the above-described embodiment, "one side in the up-down direction" according to the present invention is the lower side and "the other side in the up-down direction" according to the present invention is the upper side, but instead, "one side in the up-down direction" may be the upper side and "the other side in the up-down direction" may be the lower side. In other words, a "sensor support member" according to the present invention may have a structure in which the above-described sensor support member 2 is vertically inverted. In this case, the base portion 3 includes, in place of the upper vehicle body fixation portions 33, lower vehicle body fixation portions (not illustrated) provided at the lower end portion of the base portion 3, and the lower vehicle body fixation portions correspond to "upper-lower side vehicle body fixation portions" according to the present invention. The lower vehicle body fixation portions are fixed to, for example, the third cross member 23 disposed below the second cross member 22 and extending in the vehicle width direction between the pillar members 24L and 24R.

Although the embodiment of the present invention is described above, the present invention is not limited to the above-described embodiment and may include further modifications and changes based on the technical concept of the present invention.

For example, in the above-described embodiment, the sensor support member 2 includes both the upper vehicle body fixation portions 33 and the outer vehicle body fixation portions 34, but the present invention is not limited thereto and the sensor support member 2 may include only one of the upper vehicle body fixation portions 33 and the outer vehicle body fixation portions 34. For example, the sensor support member 2 may include no outer vehicle body fixation portions 34, and the upper vehicle body fixation portion 33 may be fixed to the first cross member 21 or the second cross member 22.

In the above-described embodiment, the vehicle structure 1 includes the first exterior panel 11 as a side panel, but the present invention is not limited thereto, and the vehicle structure 1 may include another exterior panel. In other words, the vehicle structure 1 of the present invention may be applied to the front portion of a vehicle including an exterior member having a structure different from that of the above-described exterior member 10, and an "exterior panel" according to the present invention may be any other exterior panel disposed at the front portion of the vehicle.

In the above-described embodiment, the protruding portion is constituted as the frame portion 411 that houses the sensor device S inside to protect the sensor device S, but the form of the protruding portion is not limited thereto. For example, the protruding portion may be configured so that the sensor device S is fixed to the protruding portion from the vehicle outer side so as to dispose the sensor device S further toward the vehicle outer side, and in this case, the protruding portion may have a shape other than a frame shape. Moreover, the frame portion 411 penetrates toward the vehicle inner side to facilitate wiring work for the sensor device S, but the protruding portion does not necessarily need to penetrate toward the vehicle inner side. Furthermore, in a case in which the rigidity of the sensor support member 2 is high, the sensor support portion 41 may include no protruding portion (frame portion 411).

In the above-described embodiment, the vehicle structure is applied to the front portion of a vehicle, but the present invention is not limited thereto and the vehicle structure may be applied to the rear portion or side portion of a vehicle. Specifically, the sensor support member may be disposed at the rear portion or side portion of a vehicle. In a case in which the vehicle structure is applied to the rear portion of a vehicle, the sensor support member is disposed on the vehicle inner side (vehicle front side) of, for example, a rear bumper or rear grille that is an exterior panel disposed at the vehicle rear portion. In this case, the "width direction" according to the present invention is the vehicle width direction, the "vehicle outer side" according to the present invention is the vehicle rear side, and the "vehicle inner side" according to the present invention is the vehicle front side. In a case in which the vehicle structure is applied to the side portion of a vehicle, the sensor support member is disposed on the vehicle inner side (vehicle inner side in the width direction) of an exterior panel disposed at the vehicle side portion. In this case, the "width direction" according to the present invention is the vehicle front-rear direction, the "vehicle outer side" according to the present invention is the outer side (right side or left side) in the vehicle width direction, and the "vehicle inner side" according to the present invention is the inner side (left side or right side) in the vehicle width direction.

### [Reference Signs List]

- 1: Vehicle structure
- 2: Sensor support member
- 3: Base portion
- 3a: Upper end wall
- 3s: Reference surface
- 31: Base bulging portion
- 31a: Vertical wall
- 31b: Sidewall
- 311: Narrowing portion
- 312: Extension portion
- 313: Opening portion
- 314a, 314b: Recessed portion
- 32, 32: Side portion
- 33: Upper vehicle body fixation portion (upper-lower side vehicle body fixation portion)
- 33a: Bottom wall
- 33b: Peripheral wall
- 34: Outer vehicle body fixation portion
- 34a: Peripheral wall
- 34a1: Lower wall
- 34b: Bottom wall
- 35: Intermediate width portion
- 36: Component coupling portion
- 4: Projecting bulging portion
- 4a: Vertical wall
- 4b: Sidewall
- 41: Sensor support portion
- 411: Frame portion (protruding portion)
- 411a: Frame bulging portion
- 42: Widening portion
- 5: Bulging portion
- 5a: Vertical wall
- 5a1: First portion
- 5a2: Second portion
- 5b: Connection wall
- 6: Vehicle-mounted component
- 10: Exterior member
- 11: First exterior panel (exterior panel)
- 111: Side portion
- 112: Attachment portion
- 113: Adjacent portion
- 12: Second exterior panel
- 12a: Detection wave passing region
- 13: Third exterior panel
- 20: Vehicle body structure member
- 21: First cross member
- 22: Second cross member
- 23: Third cross member
- 24L, 24R: Pillar member
- 25L, 25R: Side member
- P: Sensor fixation point
- S: Sensor device

## Claims

1. A vehicle structure comprising a sensor support member extending in an up-down direction and supporting a sensor device configured to sense an environment outside a vehicle, the vehicle structure being **characterized in that**
the sensor support member includes
a base portion fixed to a vehicle body structure member of the vehicle and including a base bulging portion that bulges toward the vehicle outer side, and
a projecting bulging portion projecting toward one side in an up-down direction with respect to the base portion so as to be continuous with the base bulging portion, and
the projecting bulging portion includes a sensor support portion that supports the sensor device.

2. The vehicle structure according to claim 1, wherein the sensor support portion includes a protruding portion that protrudes toward the vehicle outer side from a vertical wall of the projecting bulging portion, the vertical wall facing the vehicle outer side, and supports the sensor device.

3. The vehicle structure according to claim 2, wherein
the base bulging portion and the projecting bulging portion form a bulging portion that bulges toward the vehicle outer side from a reference surface of the base portion,
a vertical wall of the bulging portion, the vertical wall facing the vehicle outer side, includes a first portion on the base portion side and a second portion on the sensor support portion side, the second portion being disposed at a position offset toward the vehicle outer side with respect to the first portion, and
the bulging portion includes a connection wall that connects the first portion and the second portion in a vehicle in-out direction.

4. The vehicle structure according to claim 1 or 2, wherein a vertical wall of the projecting bulging portion, the vertical wall facing the vehicle outer side, includes a widening portion having a width that increases from the one side to the other side in the up-down direction.

5. The vehicle structure according to claim 1 or 2, wherein
the base portion includes an upper-lower side vehicle body fixation portion that is fixed to the vehicle body structure member at an end portion on the other side in the up-down direction,
a vertical wall of the base bulging portion, the vertical wall facing the vehicle outer side, includes a narrowing portion having a width that decreases from the one side toward the other side, and an extension portion extending in the up-down direction from the narrowing portion toward the other side, and
the extension portion is disposed at a position offset with respect to the upper-lower side vehicle body fixation portion in a width direction orthogonal to the up-down direction.

6. The vehicle structure according to claim 1 or 2, wherein the base bulging portion has an opening portion penetrating the base bulging portion in a vehicle in-out direction.

7. The vehicle structure according to claim 1 or 2, wherein
the base portion includes an outer vehicle body fixation portion that is fixed to the vehicle body structure member outside the base bulging portion in a width direction orthogonal to the up-down direction, and
the outer vehicle body fixation portion protrudes toward a vehicle inner side and contacts the vehicle body structure member from the vehicle outer side.

8. The vehicle structure according to claim 1 or 2, wherein
the base portion includes an upper-lower side vehicle body fixation portion that is fixed to the vehicle body structure member at an end portion on the other side in the up-down direction, and
the base bulging portion extends to the end portion of the base portion on the other side in the up-down direction.

9. The vehicle structure according to claim 2, further comprising an exterior panel that is disposed on the vehicle outer side of the sensor support member and constitutes a design surface on the vehicle outer side, wherein the exterior panel includes an adjacent portion that is disposed adjacent to an outer peripheral surface of the protruding portion.
